# EUROPEAN PATENT APPLICATION

(11) **EP 4 438 672 A1**
(43) Date of publication of application: **02.10.2024**
(21) Application number: 22898277.3
(22) Date of filing: 18.10.2022
(51) Int. Cl.: C08L 7/00, B60C 1/00, C08K 3/04, C08K 3/11, C08K 5/09, C08K 5/18, C08L 9/00, C08L 101/00

(54) **COATING RUBBER COMPOSITION FOR TIRE-REINFORCING MATERIAL, AND TIRE**

(30) Priority: 24.11.2021 JP 2021190607
(71) Applicant: BRIDGESTONE CORPORATION, Chuo-ku Tokyo 104-8340 (JP)
(72) Inventor: SAITO Junko, Tokyo 104-8340 (JP); HIDAKA Hitomi, Tokyo 104-8340 (JP)
(74) Representative: Marks & Clerk LLP
(86) International application number: PCT/JP2022/038825
(87) International publication number: WO 2023/095493

(57) **Abstract**

The present disclosure provides a coating rubber composition for tire reinforcing members having excellent thermal degradation resistance, including a rubber component, carbon black, a cobalt compound, and an amine-based antioxidant. The rubber component contains 60 to 100 mass% of an isoprene skeleton rubber. The content of the cobalt compound in cobalt equivalent is 0.21 parts by mass or more and 0.6 parts by mass or less per 100 parts by mass of the rubber component. The amine-based antioxidant is represented by the following general formula (1): 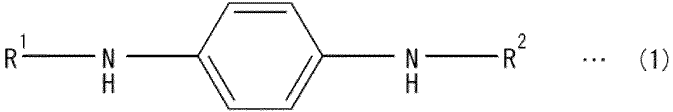 where R¹ and R² are each independently a monovalent saturated hydrocarbon group. The content of the amine-based antioxidant is 0.1 parts by mass or more per 100 parts by mass of the rubber component.

## Description

### TECHNICAL FIELD

The present disclosure relates to a coating rubber composition for tire reinforcing members, and a tire.

### BACKGROUND

Conventionally, metal reinforcing members such as steel cords are used in rubber products such as tires and industrial belts. Furthermore, various studies have been conducted on rubber compositions that are excellent in adhesion durability with the metal reinforcing member and degradation durability of rubber. For example, PTL 1 described below discloses a rubber composition containing a rubber component, a sulfenamide-based vulcanization accelerator with a certain structure, a compound containing a di- or tri-substituted benzene ring having at least one hydroxyl group as a substituent, a methylene group donor, and a cobalt compound. It is disclosed that the rubber composition significantly reduces rubber burning, and has excellent degradation durability, high elastic modulus, and excellent adhesion to a metal reinforcing member such as steel cords.

### CITATION LIST

### Patent Literature

PTL 1: JP 2010-37546 A

### SUMMARY

### (Technical Problem)

However, we have discovered that although the adhesion of a rubber composition to a reinforcing member improves as the content of the cobalt compound in the rubber composition increases, the thermal degradation resistance of the rubber composition decreases.

Accordingly, to solve the problem of the above conventional technique, an object of the present disclosure is to provide a coating rubber composition for tire reinforcing members with excellent thermal degradation resistance.

It is another object of the present disclosure to provide a tire with excellent durability including such a coating rubber composition for tire reinforcing members.

### (Solution to Problem)

The primary features of a coating rubber composition for tire reinforcing members and a tire of the present disclosure that solve the above problem are as follows.
[1] A coating rubber composition for tire reinforcing members comprising:
   a rubber component; carbon black; a cobalt compound; and an amine-based antioxidant,
   wherein the rubber component contains 60 to 100 mass% of an isoprene skeleton rubber,
   a content of the cobalt compound in cobalt equivalent is 0.21 parts by mass or more and 0.6 parts by mass or less per 100 parts by mass of the rubber component,
   the amine-based antioxidant is represented by the following general formula (1): 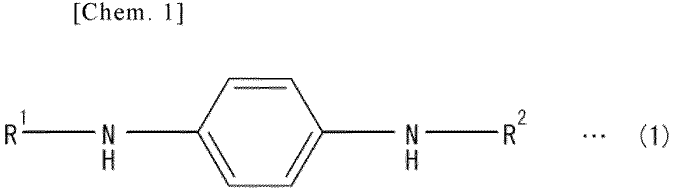 where R¹ and R² are each independently a monovalent saturated hydrocarbon group, and
   a content of the amine-based antioxidant is 0.1 parts by mass or more per 100 parts by mass of the rubber component.
[2] The coating rubber composition for tire reinforcing members according to [1], wherein the carbon black has a dibutyl phthalate (DBP) absorption number of 50 to 100 cm³/100 g.
[3] The coating rubber composition for tire reinforcing members according to [1] or [2], wherein R¹ and R² in the above general formula (1) are each independently a chain or cyclic monovalent saturated hydrocarbon group having 1 to 20 carbon atoms.
[4] The coating rubber composition for tire reinforcing members according to any one of [1] to [3], wherein the rubber component contains 1 to 20 mass% of a synthetic isoprene rubber as the isoprene skeleton rubber.
[5] The coating rubber composition for tire reinforcing members according to any one of [1] to [4], wherein the coating rubber composition is free of silica or a content of silica is 1 part by mass or less per 100 parts by mass of the rubber component.
[6] The coating rubber composition for tire reinforcing members according to any one of [1] to [5], wherein the coating rubber composition is free of thermoplastic resins.
[7] The coating rubber composition for tire reinforcing members according to any one of [1] to [6], wherein the coating rubber composition contains a thermosetting resin.
[8] The coating rubber composition for tire reinforcing members according to any one of [1] to [7], wherein a content of the carbon black is 60 parts by mass or less per 100 parts by mass of the rubber component.
[9] The coating rubber composition for tire reinforcing members according to any one of [1] to [8], wherein the coating rubber composition is free of 2,2'-methylenebis(4-methyl-6-tert-butylphenol).
[10] The coating rubber composition for tire reinforcing members according to any one of [1] to [9], wherein the coating rubber composition is free of N-phenyl-N'-(1,3-dimethylbutyl)-p-phenylenediamine.
[11] A tire comprising a reinforcing member coated with the coating rubber composition for tire reinforcing members according to any one of [1] to [10].
[12] The tire according to [11], for heavy-duty use.

### (Advantageous Effect)

According to the present disclosure, a coating rubber composition for tire reinforcing members with excellent thermal degradation resistance is provided.

In addition, according to the present disclosure, a tire with excellent durability including such a coating rubber composition for tire reinforcing members is also provided.

### BRIEF DESCRIPTION OF THE DRAWINGS

In the accompanying drawings:

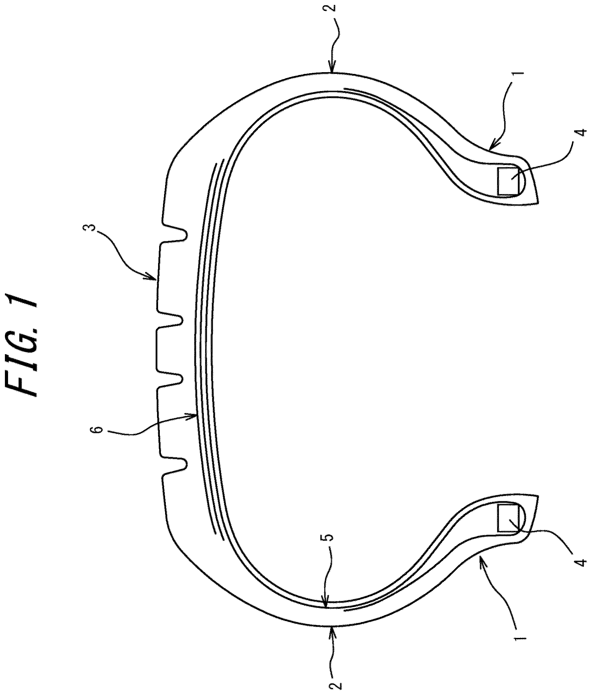

FIG. 1 is a cross-sectional view of one embodiment of a tire of the present disclosure.

### DETAILED DESCRIPTION

A coating rubber composition for tire reinforcing members and a tire of the present disclosure are described below in detail with reference to embodiments thereof.

### <Coating rubber composition for tire reinforcing members>

The coating rubber composition for tire reinforcing members (hereinafter briefly referred to as "coating rubber composition" or "rubber composition") contains a rubber component, carbon black, a cobalt compound, and an amine-based antioxidant. In the coating rubber composition of the present disclosure, the rubber component contains 60 to 100 mass% of an isoprene skeleton rubber, the content of the cobalt compound in cobalt equivalent is 0.21 parts by mass or more and 0.6 parts by mass or less per 100 parts by mass of the rubber component, the amine-based antioxidant is represented by the following general formula (1): 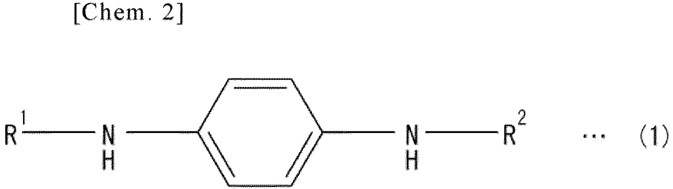 where R¹ and R² are each independently a monovalent saturated hydrocarbon group, and the content of the amine-based antioxidant is 0.1 parts by mass or more per 100 parts by mass of the rubber component.

Since the coating rubber composition of the present disclosure contains a cobalt compound and the content of the cobalt compound in cobalt equivalent is 0.21 parts by mass or more per 100 parts by mass of the rubber component, the adhesion to the reinforcing member is improved. Here, as mentioned above, although the adhesion of a rubber composition to a reinforcing member improves as the content of the cobalt compound (especially, the content of the cobalt compound in cobalt equivalent) increases, the thermal degradation resistance of the rubber composition tends to decrease. In contrast, since the coating rubber composition of the present disclosure contains 0.1 part by mass or more of the amine-based antioxidant represented by the above general formula (1) per 100 parts by mass of the rubber component, the thermal degradation resistance can be improved.

Accordingly, the coating rubber composition of the present disclosure has excellent thermal degradation resistance.

### (Rubber component)

The coating rubber composition of the present disclosure contains a rubber component, and the rubber component provides rubber elasticity to the composition. In addition, the rubber component contains an isoprene skeleton rubber, and the content of the isoprene skeleton rubber in the rubber component is 60 to 100 mass%, preferably 80 to 100 mass%. When the content of the isoprene skeleton rubber in the rubber component is 60 mass% or more, the durability of the coating rubber composition is improved. As used herein, isoprene skeleton rubber refers to rubber with isoprene units as the main skeleton thereof, examples thereof specifically include natural rubber (NR) and synthetic isoprene rubber (IR).

The rubber component contains preferably 1 to 20 mass%, more preferably 10 to 20 mass% of a synthetic isoprene rubber (IR) as the isoprene skeleton rubber. When the content of the synthetic isoprene rubber in the rubber component is 1 mass% or more, workability during mixing of the coating rubber composition is improved, and when the content is 20 mass% or less, the content of isoprene skeleton rubbers other than synthetic isoprene rubber in the rubber component is increased and the durability of the coating rubber composition is further improved.

The rubber component may include rubbers other than isoprene skeleton rubber, and diene-based rubbers, such as styrene-butadiene rubber (SBR), butadiene rubber (BR), and chloroprene rubber (CR), are preferred as other rubbers described above. The total content of the isoprene skeleton rubber and diene-based rubbers other than the isoprene skeleton rubber, in the rubber component, is preferably 80 mass% or more, more preferably 90 mass% or more, and may be 100 mass%. One of the above-mentioned rubber components may be used individually, or two or more of them may be used as a blend.

### (Carbon black)

The coating rubber composition of the present disclosure contains carbon black. The carbon black can reinforce the rubber composition and improve the reinforcing properties of the rubber composition.

Carbon black is not particularly limited. Examples include GPF, FEF, HAF, ISAF, and SAF-grade carbon blacks, for example. One type of these carbon blacks may be used alone, or two or more types may be used in combination.

From the viewpoint of crack resistance, the carbon black preferably has a dibutyl phthalate (DBP) absorption number of 50 to 100 cm³/100 g. When carbon black with a relatively low structure having a DBP absorption number of 50 to 100 cm³/100 g is used, it is possible to achieve both reinforcing properties and moderate flexibility of the rubber composition, thereby achieving excellent crack resistance. When the DBP absorption number is 50 cm³/100 g or more, the reinforcing properties of the rubber composition are improved. On the other hand, when the DBP absorption number is 100 cm³/100g or less, the structure is prevented from being excessively high, ensuring that the reinforcing properties of the rubber composition do not become excessively high, maintaining flexibility and achieving sufficient crack resistance. In addition, the DBP absorption number of the carbon black is preferably 90 cm³/100 g or less, and more preferably 80 cm³/100 g or less.

Any hard carbon produced by the oil furnace method can be used as carbon black with dibutyl phthalate (DBP) absorption number of 50 to 100 cm³/100 g. Of these, HAF-grade carbon black is preferred from the viewpoint of achieving even better low-loss properties and crack resistance.

Here, the structure of carbon black refers to the size of the structure (aggregate of carbon black particles) formed as a result of the fusion and connection of spherical carbon black particles. In addition, the DBP absorption number of carbon black refers to the amount of DBP (dibutyl phthalate) (cm³) absorbed by 100 g of carbon black, and can be measured in accordance with JIS K 6217-4 (2008).

The content of the carbon black is preferably 40 parts by mass or more and is preferably 60 parts by mass or less per 100 parts by mass of the rubber component. When the content of the carbon black is 40 parts by mass or more per 100 parts by mass of the rubber component, the reinforcing properties and crack resistance of the rubber composition are improved, and when the content of the carbon black is 60 parts by mass or less per 100 parts by mass of the rubber component, the low-loss properties of the rubber composition is improved.

The content of the carbon black is more preferably 45 parts by mass or more per 100 parts by mass of the rubber component from the viewpoint of reinforcing properties and crack resistance of the rubber composition, and is more preferably 55 parts by mass or less from the viewpoint of the low-loss properties of the rubber composition.

### (Cobalt compound)

The coating rubber composition of the present disclosure includes a cobalt compound. The cobalt compound can improve the adhesion of the rubber composition to the reinforcing member.

As the cobalt compound, cobalt salts of organic acids and composite salts in which a part of an organic acid of a cobalt salt of the organic acid is replaced by boric acid or the like are preferred from the viewpoint of adhesion to the reinforcing member.

The cobalt salts of organic acids mentioned above may be saturated, unsaturated, chain, or branched, and examples include cobalt stearate, cobalt versatate, cobalt oleate, cobalt linoleate, cobalt linolenate, cobalt abietate, cobalt caprylate, cobalt 2-ethylhexanoate, cobalt octoate, cobalt pivalate, cobalt n-heptanoate, cobalt 2,2-dimethylpentanoate, cobalt 2-ethylpentanoate, cobalt 4,4-dimethylpentanoate, cobalt n-octanoate, cobalt 2,2-dimethylhexanoate, cobalt 2-ethylhexanoate, cobalt 4,4-dimethylhexanoate, cobalt 2,4,4-trimethylpentanoate, cobalt n-nonanoate, cobalt 2,2-dimethylheptanoate, cobalt 6,6-dimethylheptanoate, cobalt 3,5,5-trimethylhexanoate, cobalt n-decanoate, cobalt 2,2-dimethyloctanoate, cobalt 7,7-dimethyloctanoate, and cobalt n-undecanoate. Examples of the composite salts include, specifically, Manobond^{™} (manufactured by OMG) and the like.

The content of the cobalt compound in cobalt equivalent is 0.21 parts by mass or more and 0.6 parts by mass or less per 100 parts by mass of the rubber component. When the content of the cobalt compound in cobalt equivalent is 0.21 parts by mass or more per 100 parts by mass of the rubber component, the adhesion of the rubber composition to the reinforcing member is improved, and when the content is 0.6 parts by mass or less, the thermal degradation resistance (degradation durability) of the rubber composition can be reduced. In addition, the content of the cobalt compound in cobalt equivalent is more preferably 0.22 parts by mass or more, even more preferably 0.23 parts by mass or more, further preferably 0.25 parts by mass or more from the viewpoint of the adhesion of the rubber composition to the reinforcing member, and is more preferably 0.5 parts by mass or less, even more preferably 0.45 parts by mass or less, further preferably 0.4 parts by mass or less from the viewpoint of thermal degradation resistance of the rubber composition.

### (Amine-based antioxidant)

The coating rubber composition of the present disclosure contains an amine-based antioxidant, and the amine-based antioxidant is represented by the above general formula (1). Although the amine-based antioxidant represented by the general formula (1) contains a phenylenediamine moiety similar to N-phenyl-N'-(1,3-dimethylbutyl)-p-phenylenediamine (Antioxidant 6PPD), which is a generally-used antioxidant, it differs from the Antioxidant 6PPD in that it has no double bond other than the phenylenediamine moiety. The amine-based antioxidant represented by the general formula (1) improves the thermal degradation resistance of the rubber composition and acts to inhibit the decrease in elongation at break (EB) after thermal degradation, and when combined with the cobalt compound described above, it can improve the thermal degradation resistance of the rubber composition.

In the above general formula (1), R¹ and R² are each independently a monovalent saturated hydrocarbon group. R¹ and R² may be the same or different, but from a synthetic point of view, they are preferably the same.

The number of carbon atoms of the monovalent saturated hydrocarbon group is preferably 1 to 20, more preferably 3 to 10, and particularly preferably 6 and 7. When the number of carbon atoms of saturated hydrocarbon groups is 20 or less, the moles per unit mass are increased, which enhances the anti-aging effect and improves the thermal degradation resistance of the rubber composition.

From the viewpoint of further improving the thermal degradation resistance of the rubber composition, R¹ and R² in the above general formula (1) are each independently preferably a chain or cyclic monovalent saturated hydrocarbon group having 1 to 20 carbon atoms.

Examples of the monovalent saturated hydrocarbon group include alkyl groups and cycloalkyl groups. The alkyl groups may be linear or branched, and the cycloalkyl groups may further have alkyl groups, etc., attached as substituents.

Examples of the alkyl groups include methyl group, ethyl group, n-propyl group, isopropyl group, n-butyl group, isobutyl group, sec-butyl group, tert-butyl group, 1,2-dimethylbutyl group, 1,3-dimethylbutyl group, 2,3-dimethylbutyl group, n-pentyl group, isopentyl group, neopentyl group, 1-methylpentyl group, 2-methylpentyl group, 3-methylpentyl group, 4-methylpentyl group, 1,2-dimethylpentyl group, 1,3-dimethylpentyl group, 1,4-dimethylpentyl group, 2,3-dimethylpentyl group, 2,4-dimethylpentyl group, 3,4-dimethylpentyl group, n-hexyl group, 1-methylhexyl group, 2-methylhexyl group, octyl groups, decyl groups, and dodecyl groups, of which 1,4-dimethylpentyl group is preferred.

Examples of the cycloalkyl group include cyclopentyl group, methylcyclopentyl groups, cyclohexyl group, methylcyclohexyl groups, cycloheptyl group, and cyclooctyl group, of which cyclohexyl group is preferred.

Examples of the amine-based antioxidant represented by the above general formula (1) specifically include N,N'-bis(1,4-dimethylpentyl)-p-phenylenediamine (Antioxidant 77PD), N,N'-bis(1-ethyl-3-methylpentyl)-p-phenylenediamine, and N,N'-dicyclohexyl-p-phenylenediamine (Antioxidant CCPD). Of these, N,N'-bis(1,4-dimethylpentyl)-p-phenylenediamine (Antioxidant 77PD) and N,N'-dicyclohexyl-p-phenylenediamine (CCPD) are preferable, with N,N'-bis(1,4-dimethylpentyl)-p-phenylenediamine (Antioxidant 77PD) being particularly preferred. The above-mentioned amine-based antioxidants may be used alone or in combination with two or more.

The content of the amine-based antioxidant is 0.1 parts by mass or more, and is preferably 11 parts by mass or less, per 100 parts by mass of the rubber component. If the content of the amine-based antioxidant is less than 0.1 parts by mass per 100 parts by mass of the rubber component, thermal degradation resistance of the rubber composition cannot be sufficiently ensured and the decreases in elongation at break (EB) of the rubber composition after thermal degradation cannot be sufficiently suppressed. On the other hand, when the content of the amine-based antioxidant is 11 parts by mass or less per 100 parts by mass of the rubber component, the adverse effects on rubber properties other than thermal degradation resistance (heat buildup property, etc.) are reduced, which makes the composition suitable for tire applications. The content of the amine-based antioxidant is preferably 0.5 parts by mass or more, even preferably 1 part by mass or more per 100 parts by mass of the rubber component from the viewpoint of thermal degradation resistance, and is preferably 10 parts by mass or less, and even preferably 8 parts by mass or less per 100 parts by mass of the rubber component from the viewpoint of effect on other rubber properties.

### (Quinoline-based antioxidant)

The coating rubber composition of the present disclosure may contain a quinoline-based antioxidant. The quinoline-based antioxidant is an antioxidant having a quinoline moiety or a derivative moiety thereof (such as a dihydroquinoline moiety). This quinoline-based antioxidant improves the thermal degradation resistance of the rubber composition and has the effect of suppressing the decrease in elongation at break (EB) after thermal degradation.

The quinoline-based antioxidant preferably has a dihydroquinoline moiety, and even preferably has a 1,2-dihydroquinoline moiety.

Specifically, examples of the quinoline-based antioxidant include a polymer of 2,2,4-trimethyl-1,2-dihydroquinoline (Antioxidant TMDQ), 6-ethoxy-2,2,4-trimethyl-1,2-dihydroquinoline, and 6-anilino-2,2,4-trimethyl-1,2-dihydroquinoline.

The quinoline-based antioxidant preferably contains a polymer of 2,2,4-trimethyl-1,2-dihydroquinoline (Antioxidant TMDQ). A quinoline-based antioxidant containing a polymer of 2,2,4-trimethyl-1,2-dihydroquinoline is highly effective in improving the thermal degradation resistance of the rubber composition, and also has the advantage of being less prone to causing discoloration of the rubber composition.

Note that examples of the polymer of 2,2,4-trimethyl-1,2-dihydroquinoline include a dimer, trimer, and tetramer of 2,2,4-trimethyl-1,2-dihydroquinoline.

The content of the quinoline-based antioxidant is preferably 0.1 to 5 parts by mass per 100 parts by mass of the rubber component. When the content of the quinoline-based antioxidant is 0.1 parts by mass per 100 parts by mass of the rubber component, the thermal degradation resistance of the rubber composition is improved and the decreases in the elongation at break (EB) after thermal degradation of the rubber composition can be further suppressed. On the other hand, when the content of the quinoline-based antioxidant is 5 parts by mass or less per 100 parts by mass of the rubber component, the adverse effects on rubber properties other than thermal degradation resistance (heat buildup property, etc.) are suppressed, which makes the composition suitable for tire applications. The content of the quinoline-based antioxidant is more preferably 0.3 parts by mass or more, even more preferably 0.5 parts by mass or more per 100 parts by mass of the rubber component from the viewpoint of thermal degradation resistance, and is more preferably 4 parts by mass or less, even more preferably 3 parts by mass or less per 100 parts by mass of the rubber component from the viewpoint of effect on other rubber properties.

### (Silica)

It is preferable that the coating rubber composition of the present disclosure is free silica or the content of silica is 1 part by mass or less per 100 parts by mass of the rubber component. Since silica reduces workability during the mixing of the rubber composition, workability during the mixing of the rubber composition can be improved when the rubber composition is free of silica or when the content of silica is 1 part by mass or less per 100 parts by mass of the rubber component.

### (Thermoplastic resin)

The coating rubber composition of the present disclosure is preferably free of thermoplastic resins. Thermoplastic resins make rubber compositions more prone to creep and reduce durability against repeated inputs. Thus, when the rubber composition is free of thermoplastic resins, the durability of the rubber composition can be improved. Here, examples of thermoplastic resins include Cs resins, C₅-C₉ resins, C₉ resins, dicyclopentadiene resins, terpene phenolic resins, terpene resins, rosin resins, alkyl phenolic resins, and the like.

### (Thermosetting resin)

The coating rubber composition of the present disclosure preferably includes a thermosetting resin. The thermosetting resin can reduce the hysteresis loss of the rubber composition (improving the low-loss properties) and can also improve the crack resistance, thereby enhancing durability. Accordingly, when the coating rubber composition contains a thermosetting resin, the low-loss properties and crack resistance (durability) of the rubber composition can be improved.

The thermosetting resin is preferably a phenolic resin. The inclusion of the phenolic resin (preferably together with a methylene donor to be described later) can maintain the low-loss properties of the rubber composition while improving the reinforcing properties and enhancing the crack resistance.

The phenolic resin is not particularly limited and can be selected according to the required performance. For example, examples thereof include resins produced by the condensation reaction of phenols such as phenol, cresol, resorcinol, and tert-butylphenol, or a mixture thereof, and formaldehyde, in the presence of an acid catalyst such as hydrochloric acid and oxalic acid. The phenolic resin may be modified, for example, by oil such as rosin oil, tall oil, cashew oil, linoleic acid, oleic acid, and linolenic acid. One phenolic resin may be included or several phenolic resins may be included in a mixture.

The content of the thermosetting resin is preferably 2 to 10 parts by mass, and more preferably 3 to 7 parts by mass per 100 parts by mass of the rubber component. When the content of the thermosetting resin is 2 parts by mass or more per 100 parts by mass of the rubber component, crack resistance can be further improved. When the content is 10 parts by mass or less, deterioration in low-loss properties can be suppressed.

### (Methylene donor)

When the coating rubber composition of the present disclosure contains a phenolic resin as the thermosetting resin, the coating rubber composition preferably further contains a methylene donor. The inclusion of a melamine donor as a curing agent for the phenolic resin improves the reinforcing properties of the rubber composition while maintaining the low-loss properties of the rubber composition.

The methylene donor is not particularly limited and can be selected according to the required performance. For example, hexamethylenetetramine, hexamethoxymethylolmelamine, pentamethoxymethylolmelamine, hexamethoxymethylmelamine, pentamethoxymethylmelamine, hexaethoxymethylmelamine, hexakis-(methoxymethyl)melamine, N,N',N"-trimethyl-N,N',N"-trimethylolmelamine, N,N',N"-trimethylolmelamine, N-methylolmelamine, N,N'-(methoxymethyl)melamine, N,N',N"-tributyl-N,N',N"-trimethylolmelamine, and paraformaldehyde are mentioned. Of these methylene donors, hexamethylenetetramine, hexamethoxymethylmelamine, hexamethoxymethylolmelamine, and paraformaldehyde are preferred. These methylene donors may be used alone or in combination.

The ratio of the content of phenolic resin to the content of methylene donor (content of phenolic resin / content of methylene donor) is preferably 0.6 to 7, and more preferably 1 to 5 from the viewpoint of achieving both low-loss properties and crack resistance at higher levels. When the ratio of the content of phenolic resin to the content of methylene donor is 0.6 or more, crack resistance is further improved, and when the ratio is 7 or less, the low-loss properties are further improved.

### (Antioxidant o-MBp14)

The coating rubber composition of the present disclosure is preferably free of 2,2'-methylenebis(4-methyl-6-tert-butylphenol) (Antioxidant o-MBp14). The rubber composition becomes more environmentally friendly when it is free of the Antioxidant o-MBp14.

### (Antioxidant 6PPD)

The coating rubber composition of the present disclosure is preferably free of N-phenyl-N'-(1,3-dimethylbutyl)-p-phenylenediamine (Antioxidant 6PPD). The rubber composition becomes more environmentally friendly when it is free of the Antioxidant 6PPD.

### (Wax)

The coating rubber composition of the present disclosure may contain a wax. When the rubber composition contains a wax, the ozone resistance of the rubber composition is further improved.

Examples of the wax include paraffin wax and microcrystalline wax.

The content of the wax is preferably 0.1 to 5 parts by mass per 100 parts by mass of the rubber component. When the content of the wax is 0.1 parts by mass or more per 100 parts by mass of the rubber component, the ozone resistance of the rubber composition is further improved. Furthermore, when the content of the wax is 5 parts by mass or less per 100 parts by mass of the rubber component, the effects on rubber properties other than ozone resistance are small. The content of the wax is more preferably 0.5 parts by mass or more, even more preferably 1 part by mass or more per 100 parts by mass of the rubber component from the viewpoint of ozone resistance, and is more preferably 4 parts by mass or less, even more preferably 3 parts by mass or less per 100 parts by mass of the rubber component from the viewpoint of effect on other rubber properties.

### (Sulfur)

The coating rubber composition of the present disclosure preferably contains sulfur. The inclusion of sulfur in the rubber composition enables vulcanization and improves the durability (particularly elongation at break (EB) and tensile strength (TB)) of the rubber composition.

Various types of sulfur can be used as the sulfur, but generally-used sulfur (e.g., soluble sulfur (powdered sulfur)) is preferred over insoluble sulfur, and oil-treated sulfur is also preferred. As used herein, insoluble sulfur is sulfur that is insoluble in carbon disulfide (amorphous polymeric sulfur), and soluble sulfur (powdered sulfur) is sulfur that is soluble in carbon disulfide.

The content of the sulfur is preferably in a range of 0.1 to 10 parts by mass and more preferably in a range of 1 to 5 parts by mass per 100 parts by mass of the rubber component. When the content of the sulfur is 0.1 parts by mass or more per 100 parts by mass of the rubber component, the durability of vulcanized rubber can be secured, and when the content is 10 parts by mass or less per 100 parts by mass of the rubber component, sufficient rubber elasticity can be ensured.

### (Other components)

In addition to the rubber component, carbon black, cobalt compound, amine-based antioxidant, quinoline-based antioxidant, thermosetting resin, wax, and sulfur, mentioned above, the coating rubber composition of the present disclosure may contain various other components generally used in the rubber industry as needed, such as fillers other than carbon black or silica (such as calcium carbonate), silane coupling agents, softening agents, processing aids, surfactants, organic acids (e.g., stearic acid), zinc oxide (zinc white), vulcanization accelerators, and vulcanizing agents other than sulfur, which may be selected as needed, to the extent that they do not impair the purpose of the present disclosure. Commercial products are suitable for use as these compounding agents.

Note that the amine-based antioxidant represented by the above general formula (1) may be supported on any carrier. For example, the amine-based antioxidant represented by the above general formula (1) may be supported on an inorganic filler such as calcium carbonate.

Furthermore, the amine-based antioxidant represented by the above general formula (1) may form a master batch together with the rubber component. Here, the rubber component used to produce the master batch is not limited, and may be diene rubber such as natural rubber (NR), ethylenepropylene-diene rubber (EPDM), or the like.

Furthermore, the amine-based antioxidant represented by the above general formula (1) may also be a salt with an organic acid. Here, the organic acid used to form the salt is not particularly limited, and examples include stearic acid.

### (Method of manufacturing coating rubber composition)

The method of manufacturing the coating rubber composition is not particularly limited, but the rubber composition can be manufactured, for example, by blending the rubber component, carbon black, the cobalt compound, and the amine-based antioxidant mentioned above with various components selected as needed, and then kneading, warming, extruding, etc. Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, which are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc. for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, about 100°C to 190°C.

### (Reinforcing member)

The reinforcing member to be coated with the coating rubber composition of the present disclosure is preferably made of a metal, in other words, the reinforcing member is preferably a metal reinforcing member. The coating rubber composition (coating rubber) can be used to coat the metal reinforcing member to form a metal reinforcing member-rubber composite.

Here, the metal reinforcing member may be, for example, a wire-, plate-, or chain-shaped member made of steel, iron, stainless steel, lead, aluminum, copper, brass, bronze, a Monel metal alloy, nickel, zinc, or the like. Steel cords are particularly preferred as the metal reinforcing member. The diameter of the steel cords is selected according to the application.

In addition, the metal reinforcing member may have a plating layer on the surface thereof. Examples of the plating layer include a brass plating layer, a zinc plating layer, and a copper plating layer. Of these, a brass plating layer is preferred from the viewpoint of adhesion with the coating rubber composition (coating rubber). Note that the brass-plating layer preferably has a proportion based on the mass of copper: zinc in the range of 60: 40 to 70: 30.

### <Tire>

The tire of the present disclosure includes a reinforcing member coated with the coating rubber composition for tire reinforcing members described above. The tire of the present disclosure has high thermal degradation resistance of the coating rubber composition (coating rubber) and excellent durability because it has the reinforcing member coated with the coating rubber composition for tire reinforcing members described above.

The tire of the present disclosure is preferably for heavy-duty use, in other words, it is preferably a heavy-duty tire. Since various parts of heavy-duty tires are thick, the temperature tends to be generated at some regions during vulcanization molding. Moreover, the temperature tends to be generated in some regions during driving. Additionally, because heavy-duty tires are often used after retreaded and the total mileage tends to be long, high thermal degradation resistance is demanded for heavy-duty tires. When the above-mentioned coating rubber composition with excellent thermal degradation resistance is applied, the high durability of the coating rubber (coating rubber composition) after thermal degradation can be maintained. Accordingly, the tire of the present disclosure is particularly referred as a heavy-duty tire, and can be suitably used for trucks, buses, off-the-road vehicles (e.g., vehicles for construction, mining, etc.), small trucks (light trucks), industrial vehicles, aircraft, and other heavy-duty tire applications, for example.

FIG. 1 is a cross-sectional view of one embodiment of the tire of the present disclosure. The tire illustrated in FIG. 1 includes a pair of bead portions 1, a pair of sidewall portions 2, a tread portion 3, a carcass (preferably a radial carcass) 5 extending in a toroidal shape between bead cores 4 embedded in the bead portions 1, and a belt 6 consisting of two belt layers provided in the tread portion 3 (more specifically, provided on the outer side in the tire radial direction of a crown portion of the carcass 5).

In the tire illustrated in FIG. 1, the carcass 5 is formed of a single carcass ply, includes a main body of the toroidal shape extending between the bead cores 4 embedded in the respective bead portions 1, and folded portions formed by rolling the carcass 5 along the bead cores 4 radially outwardly from the inner side to the outer side in the tire width direction. However, for the tire of the present disclosure, the number of the ply and the structure of the carcass 5 are not limited thereto. Here, the carcass ply that forms the carcass 5 is made of a plurality of reinforcing cords (reinforcing members such as steel cords and organic fiber cords) covered with the coating rubber.

Furthermore, the belt 6 of the tire illustrated in FIG. 1 is composed of two belt layers. Each belt layer is typically made of a rubber-coated layer of reinforcing cords (reinforcing members), preferably made of a rubber-coated layer of steel cords (reinforcing members) extending inclined relative to the tire equatorial plane. Moreover, the two belt layers are laminated so that the reinforcing cords constituting the belt layers intersect each other across the tire equatorial plane, to form the belt 6. Although the belt 6 in FIG. 1 consists of two belt layers, the number of the belt layers constituting the belt 6 in the present disclosure may be any number of one or more and is not limited to two.

Examples of the tire members, to which the reinforcing member coated with the coating rubber composition (reinforcing member-rubber composite) is applied, preferably include the belt 6, the carcass 5, the bead cores 4, and the like.

In accordance with the type of tire to be applied, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. The tire of the present disclosure may be a pneumatic tire or a solid tire. Here, when the tire of the present disclosure is a pneumatic tire, the pneumatic tire may be filled with ordinary air or air with an adjusted partial pressure of oxygen, or may also be filled with an inert gas such as nitrogen, argon, or helium.

### EXAMPLES

The present disclosure will be described in more detail below with reference to examples, although the present disclosure is not limited to these examples.

### <Examples 1 to 5 and Comparative Examples 1 to 4>

### (Preparation of rubber composition)

Rubber compositions are produced according to the formulations summarized in Table 1. In addition to the ingredients summarized in Table 1, the rubber composition produced contains 6.0 parts by mass of common sulfur and 7.5 parts by mass of zinc white as other ingredients per 100 parts by mass of the rubber component.

The retention rate of elongation at break (EB) after thermal degradation is evaluated for the obtained rubber compositions by the following method.

### (1) Retention rate of elongation at break (EB) after thermal degradation

The rubber compositions are vulcanized to prepare vulcanized rubber test pieces. A tensile test is conducted on the test pieces immediately after fabrication in accordance with JIS K 6251 to measure the initial elongation at break (EB).

Then, the vulcanized rubber test pieces are then thermally degraded by allowing to stand at 100°C for 24 hours, and a tensile test is conducted on the thermally degraded test pieces in accordance with JIS K 6251 to measure the elongation at break (EB) after thermal degradation.

From the initial elongation at break (EB) and the elongation at break (EB) after thermal degradation, the retention rate of elongation at break (EB) after thermal degradation is calculated according to the following formula. Retention rate of elogation at break (EB) after thermal degradation = elongation at break (EB) after thermal degradation/initial elogation at break (EB) × 100 (%)

The higher the retention rate of elongation at break (EB) after thermal degradation, the higher the thermal degradation resistance (durability after thermal degradation).

**[Table 1]**

| | | | Comp. Ex. 1 | Comp. Ex. 2 | Comp. Ex. 3 | Comp. Ex. 4 | Example 1 | Example 2 | Example 3 | Example 4 | Example 5 |
|---|---|---|---|---|---|---|---|---|---|---|---|
| Formulation | NR *1 | parts by mass | 100 | 100 | 85 | 85 | 100 | 85 | 85 | 100 | 100 |
| | IR *2 | | - | - | 15 | 15 | - | 15 | 15 | - | - |
| | Carbon black *3 | | 55 | 40 | 55 | 55 | 55 | 55 | 55 | 55 | 40 |
| | Silica*4 | | 5 | - | - | - | - | - | - | - | - |
| | Antioxidant TMDQ *5 | | 1 | - | 1 | 1 | - | - | - | - | - |
| | Antioxidant 77PD *6 | | 1 | - | - | - | 1.1 | 2 | 1.1 | 2 | 2 |
| | Antioxidant o-MBp14 *7 | | - | 2 | 2 | 2 | - | - | - | - | 2 |
| | Antioxidant 6PPD *8 | | - | 1 | 1 | 1 | - | - | - | - | - |
| | Thermosetting phenolic resin *9 | | - | 5 | - | - | - | - | - | - | 5 |
| | Thermoplastic resin (C5C 9) *10 | | 1 | - | - | - | - | 1 | 1 | - | - |
| | Cobalt compound A *11 (Content in cobalt equivalent) | | 1 (0.17) | - | - | - | - | - | - | - | - |
| | Cobalt compound B *12 (Content in cobalt equivalent) | | - | 1 (0.22) | 1 (0.22) | 2 (0.44) | 1 (0.22) | 1 (0.22) | 1.5 (0.33) | 2 (0.44) | 2 (0.44) |
| Evaluation | Retention rate of EB after thermal degradation | % | 42.1 | 47.7 | 42.1 | 38.4 | 45.5 | 46.3 | 43.5 | 42.3 | 47.9 |

| | | | | | | | | | | | |
|---|---|---|---|---|---|---|---|---|---|---|---|
| *1 NR: natural rubber *2 IR: synthetic isoprene rubber, trade name "IR2200" manufactured by JSR Corporation *3 Carbon black: trade name "N326" manufactured by Tokai Carbon Co., Ltd., nitrogen adsorption specific surface area (N₂SA) = 78 m²/g, iodine adsorption number (IA) = 82 mg/g, N₂SA/IA = 0.95 m²/mg, DBP absorption number = 72 cm³/100 g *4 Silica: trade name "Nipsil AQ" manufactured by Tosoh Silica Corporation, nitrogen adsorption specific surface area = 210 m²/g, BET surface area = 205 m²/g *5 Antioxidant TMDQ: polymer of 2,2,4-trimethyl-1,2-dihydroquinoline, trade name "NONFLEX RD" manufactured by Seiko-Chemical Co., Ltd. as a quinoline-based antioxidant *6 Antioxidant 77PD: N,N'-bis(1,4-dimethylpentyl)-p-phenylenediamine as an amine-based antioxidant where R¹ and R² in the general formula (1) are saturated hydrocarbon groups (1,4-dimethylpentyl groups), trade name "Santoflex 77PD" manufactured by EASTMAN Chemical Company *7 Antioxidant o-MBp14: 2,2'-methylenebis(4-methyl-6-tert-butylphenol) as a bisphenol-based antioxidant, trade name "NOCRAC NS-6" manufactured by Ouchi Shinko Chemical Industrial Co., Ltd. *8 Antioxidant 6PPD: N-phenyl-N'-(1,3-dimethylbutyl)-p-phenylenediamine as an amine-based antioxidant where one of R¹ and R² in the general formula (1) is an unsaturated hydrocarbon group (phenyl group), trade name "Antigen 6C" manufactured by Sumitomo Chemical Co., Ltd. *9 Thermosetting phenolic resin: modified phenolic resin (tall modified phenolic resin), trade name "Sumilite Resin PR-51587" manufactured by Sumitomo Bakelite Co., Ltd. *10 Thermoplastic resin: C₅-C₉ resin, trade name "Quinton 1105" manufactured by ZEON Corporation *11 Cobalt compound A: total amount of Co-STEARATE manufactured by DIC Corporation (cobalt stearate, cobalt content = 9.5 mass%, 0.50 parts by mass) and DICNATE NBC-2 manufactured by DIC Corporation (cobalt 3 neodecanoate borate, cobalt content = 22.2 mass%, 0.54 parts by mass), the contents in cobalt equivalent are indicated in parentheses *12 Cobalt compound B: trade name "Manobond C" manufactured by OMG, composite salt in which a part of an organic acid in the cobalt salt of the organic acid is replaced by boric acid, cobalt content: 22.0 mass%, the contents in cobalt equivalent are indicated in parentheses | | | | | | | | | | | |

It is understood from Table 1 that the rubber compositions of the examples according to the present disclosure have excellent thermal degradation resistance.

### <Example 6 and Comparative Example 5>

### (Preparation of rubber composition)

Rubber compositions were produced according to the formulations summarized in Table 2. The retention rate of elongation at break (EB) after thermal degradation was evaluated for the obtained rubber compositions by the following method.

### (2) Retention rate of elongation at break (EB) after thermal degradation

The rubber compositions were vulcanized to prepare vulcanized rubber test pieces. A tensile test was conducted on the test pieces immediately after fabrication in accordance with JIS K 6251 to measure the initial elongation at break (EB).

Then, the vulcanized rubber test pieces were then thermally degraded by allowing to stand at 100°C for 24 hours, and a tensile test was conducted on the thermally degraded test pieces in accordance with JIS K 6251 to measure the elongation at break (EB) after thermal degradation.

The retention rate of elongation at break (EB) after thermal degradation was calculated from the initial elongation at break (EB) and the elongation at break (EB) after thermal degradation according to the following formula. Retention rate of elongation at break (EB) after thermal degradation = elongation at break (EB) after thermal degradation / initial elongation at break (EB) × 100 (%)

Furthermore, the retention rate of elongation at break (EB) after thermal degradation was indicated as an index value taking the result of Comparative Example 5 as 100. The larger the index value, the higher the retention rate of elongation at break (EB) after thermal degradation, indicating higher thermal degradation resistance (durability after thermal degradation).

**[Table 2]**

| | | | Comp. Ex. 5 | Example 6 |
|---|---|---|---|---|
| Formulation | NR *1 | parts by mass | 100 | 100 |
| | Carbon black *13 | | 50 | 50 |
| | Zinc oxide *14 | | 8 | 8 |
| | Antioxidant o-MBp14 *7 | | 0.5 | 0.5 |
| | Cobalt compound B *12 (Content in cobalt equivalent) | | 1 (0.22) | 1 (0.22) |
| | Antioxidant TMDQ *5 | | 0.4 | 0.4 |
| | Antioxidant 6PPD *8 | | 0.3 | - |
| | Antioxidant 77PD *6 | | - | 0.7 |
| | Sulfur *15 | | 6 | 6 |
| | Vulcanization accelerator DCBS *16 | | 0.8 | 0.8 |
| Evaluation | Retention rate of EB after thermal degradation | Index | 100 | 106 |

| | | | | |
|---|---|---|---|---|
| *1, *5, *6, *7, *8, and *12 are the same as those in Table 1 *13 Carbon black: trade name "Asahi #70L" manufactured by Asahi Carbon Co., Ltd., DBP absorption number = 75 cm³/100 g *14 Zinc oxide: trade name "Zinc oxide type 2" manufactured by HakusuiTech Co., Ltd. *15 Sulfur: trade name "CRYTEX HS OT20" manufactured by Eastman MFG Japan *16 Vulcanization accelerator DCBS: N,N-dicyclohexyl-2-benzothiazolyl sulfenamide, trade name "NOCCELER DZ" manufactured by Ouchi Shinko Chemical Industrial Co., Ltd. | | | | |

It is understood from Table 2 that the rubber composition of Example 6 according to the present disclosure has a higher retention rate of elongation at break (EB) after thermal degradation than the rubber composition of Comparative Example 5.

### REFERENCE SIGNS LIST

1: bead portion, 2: sidewall portion, 3: tread portion, 4: bead core, 5: carcass, 6: belt

## Claims

1. A coating rubber composition for tire reinforcing members comprising:
a rubber component; carbon black; a cobalt compound; and an amine-based antioxidant,
wherein the rubber component contains 60 to 100 mass% of an isoprene skeleton rubber,
a content of the cobalt compound in cobalt equivalent is 0.21 parts by mass or more and 0.6 parts by mass or less per 100 parts by mass of the rubber component,
the amine-based antioxidant is represented by the following general formula (1): 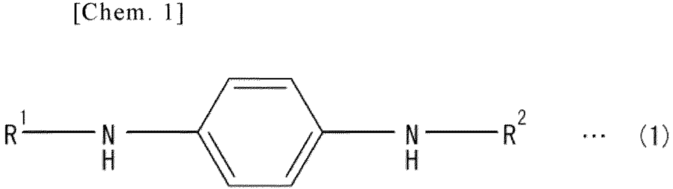 where R¹ and R² are each independently a monovalent saturated hydrocarbon group, and
a content of the amine-based antioxidant is 0.1 parts by mass or more per 100 parts by mass of the rubber component.

2. The coating rubber composition for tire reinforcing members according to claim 1, wherein the carbon black has a dibutyl phthalate (DBP) absorption number of 50 to 100 cm³/100 g.

3. The coating rubber composition for tire reinforcing members according to claim 1 or 2, wherein R¹ and R² in the above general formula (1) are each independently a chain or cyclic monovalent saturated hydrocarbon group having 1 to 20 carbon atoms.

4. The coating rubber composition for tire reinforcing members according to any one of claims 1 to 3, wherein the rubber component contains 1 to 20 mass% of a synthetic isoprene rubber as the isoprene skeleton rubber.

5. The coating rubber composition for tire reinforcing members according to any one of claims 1 to 4, wherein the coating rubber composition is free of silica or a content of silica is 1 part by mass or less per 100 parts by mass of the rubber component.

6. The coating rubber composition for tire reinforcing members according to any one of claims 1 to 5, wherein the coating rubber composition is free of thermoplastic resins.

7. The coating rubber composition for tire reinforcing members according to any one of claims 1 to 6, wherein the coating rubber composition contains a thermosetting resin.

8. The coating rubber composition for tire reinforcing members according to any one of claims 1 to 7, wherein a content of the carbon black is 60 parts by mass or less per 100 parts by mass of the rubber component.

9. The coating rubber composition for tire reinforcing members according to any one of claims 1 to 8, wherein the coating rubber composition is free of 2,2'-methylenebis(4-methyl-6-tert-butylphenol).

10. The coating rubber composition for tire reinforcing members according to any one of claims 1 to 9, wherein the coating rubber composition is free of N-phenyl-N'-(1,3-dimethylbutyl)-p-phenylenediamine.

11. A tire comprising a reinforcing member coated with the coating rubber composition for tire reinforcing members according to any one of claims 1 to 10.

12. The tire according to claim 11, for heavy-duty use.
